(19) Europäisches Patentamt
European Patent Office
Office européen des brevets

(11) EP 2 415 706 A1

(12) **EUROPEAN PATENT APPLICATION**
published in accordance with Art. 153(4) EPC

(43) Date of publication:
08.02.2012 Bulletin 2012/06

(51) Int Cl.:
*C01B 3/36* (2006.01)     *C01B 3/38* (2006.01)
*F23D 14/62* (2006.01)

(21) Application number: 10758180.3

(22) Date of filing: 11.03.2010

(86) International application number:
PCT/JP2010/001737

(87) International publication number:
WO 2010/113394 (07.10.2010 Gazette 2010/40)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 31.03.2009 JP 2009087125

(71) Applicants:
• JGC Corporation
Chiyoda-Ku
Tokyo 100-0004 (JP)
• Osaka Gas Co., Ltd.
Osaka 541-0046 (JP)

(72) Inventors:
• OGURO, Shuichi
Higashiibaraki-gun
Ibaraki 311-1313 (JP)
• YAMADA, Nobuhiro
Higashiibaraki-gun
Ibaraki 311-1313 (JP)

(74) Representative: TBK
Bavariaring 4-6
80336 München (DE)

(54) **GAS MIXING DEVICE, SYNTHETIC GAS MANUFACTURING DEVICE, GAS MIXING METHOD, AND SYNTHETIC GAS MANUFACTURING METHOD**

(57)     [Problem] To provide a gas mixing device capable of promptly mixing a combustible gas with a combustion supporting gas with its simple configuration, and a synthetic gas manufacturing apparatus using the device.

[Means for Resolution] In a gas mixing device which supplies a combustible gas and a combustion supporting gas from flow channels of a double pipe including an inner pipe 21 and an outer pipe 22 and mixes the gases, a first guide member 23 guides the gas, flowing out from a gas outflow port on one end side of the inner pipe 21, outward, and a second guide member 24 is formed in an annular shape along an inner peripheral wall of the outer pipe 22 of the second guide member 24 so that the inner peripheral portion is located closer to the upstream side than the outer peripheral portion and the inner peripheral portion is located closer to the center than the outer peripheral portion of the first guide member 23. In addition, a third guide member 25 is provided so as to face a region surrounded by the second guide member 24.

Fig. 4

GAS MIXING DEVICE 2
22 OUTER PIPE
21 INNER PIPE
231
23 FIRST DISK
3
241
24 ANNULAR PLATE
25 SECOND DISK
251
261
26 DISPERSION PLATE
262

EP 2 415 706 A1

## Description

Technical Field

The present invention relates to a technology of mixing a combustible gas containing, for example, methane with a combustion supporting gas such as an oxygen containing gas and a technology of manufacturing a synthetic gas by using the mixing technology.

Background Art

In recent years, due to an earth environment problem caused by a large consumption of fossil fuel such as oil and coal or a depletion problem of oil resource in future, a GTL (hydrocarbon liquid fuel) or DME (dimethyl ether) as clean fuel manufactured from a natural gas has gained attention. A raw material gas used for manufacturing the GTL or DME is called a synthetic gas, and contains carbon monoxide and hydrogen.

As a method of manufacturing the synthetic gas, a steam reforming method (SMR) for reforming a natural gas or the like by using steam, a partial oxidization method (POX) for using oxygen in a non-catalyzed condition, an auto thermal reforming method (ATR method) for performing a steam reforming reaction and an oxidization reaction using an oxygen burner in the same reactor, or the like was known in the past. The present applicant has developed a new process of manufacturing a synthetic gas by adopting a catalytic partial oxidation method (CPO method) in which there is a small possibility of a problem such as precipitation of carbon or occurrence of soot during a reaction and which has a simple configuration compared with the existing methods.

The CPO method is a method of obtaining a synthetic gas by partially oxidizing hydrocarbon gas in such a manner that hydrocarbon gas separated from a natural gas or the like contacts with an oxygen containing gas in a catalyzed condition. In the CPO method, it is necessary to sufficiently mix hydrocarbon gas with an oxygen containing gas in advance in a mixing container, and to supply the resultant to a catalyst layer without causing a combustion reaction. However, the hydrocarbon gas is a combustible gas, and the oxygen containing gas is a combustion supporting gas, where there are diffusely-arranged regions each having the stoichiometric proportion in which both gases react with each other to cause a combustion reaction therebetween, and a combustion speed becomes the fastest even in the state where both gases are not sufficiently mixed. For this reason, there is a problem in that a sudden combustion reaction may occur in a mixed gas due to a supply of ignition energy caused by pipe friction or backfire from a catalyst layer. Accordingly, it is desirable to mix both gases as promptly as possible, and to decrease a region having a large combustion speed as small as possible.

Regarding the gas mixing device, the present applicant has developed a gas mixing device capable of suppressing a progress of a sudden combustion reaction in such a manner that a ceramic ball or the like is filled into a gas mixing device so as to form a narrow gas flow channel in the inside of the mixing container, and a flow velocity of a mixed gas flowing through the gas flow channel is made to be larger than a combustion speed of the mixed gas (Patent Document 1).

Prior Art Document

Patent Document

    Patent Document 1: JP-A-2009-29680: paragraph 0022, paragraphs 0028 to 0030, and Fig. 3

Disclosure of the Invention

Problems that the Invention is to Solve

Here, the gas mixing device disclosed in Patent Document 1 has a structure in which a filling material is filled into the device and has a comparatively complex structure. Therefore, the present inventor has thought that there is a need to further downsize this kind of gas mixing device, to decrease the weight thereof, and to simplify the structure thereof, and has conducted a careful study thereof.

The present invention is contrived in consideration of such circumstances, and an object of the invention is to provide a gas mixing device capable of promptly mixing a combustible gas with a combustion supporting gas with its simple configuration, a synthetic gas manufacturing apparatus using the device, a gas mixing method, and a synthetic gas manufacturing method.

Means for Solving the Problems

A gas mixing device according to the invention includes: an inner pipe which supplies one of a combustible gas and a combustion supporting gas from a gas outflow port as an opening on one end side thereof; an outer pipe which is disposed so as to surround the inner pipe and extends to the downstream side of the gas outflow port of the inner pipe so that a space formed between the outer pipe and the inner pipe forms a flow channel of the other of the combustible gas and the combustion supporting gas; a first guide member which is provided inside the outer pipe on the downstream side of the gas outflow port so as to guide the gas, flowing out from the gas outflow port of the inner pipe, outward and is larger than an inner diameter of the inner pipe; a second guide member which is formed in an annular shape along the inner wall of the outer pipe on the downstream side of the first guide member so that the inner peripheral portion is located closer to the upstream side than the outer peripheral portion and the inner peripheral portion is located closer to the center than the outer peripheral portion of the first guide member; and a third guide member which is provided on the downstream side of the second guide member in the outer pipe so as to guide the gas, guided by the second guide member, outward.

In addition, the gas mixing device may have the following characteristics.

(a) The outer peripheral portion of the first guide member is provided with a protrusion which is provided in the circumferential direction so as to protrude to the upstream side.

(b) A surface on the upstream side of the second guide member is formed as an inclined surface which is inclined from the outer peripheral portion toward the inner peripheral portion.

A synthetic gas manufacturing apparatus according to another invention includes: the gas mixing device in which the combustible gas mainly containing methane is supplied to the outer pipe and an oxygen containing gas as the combustion supporting gas is supplied to the inner pipe; a gas treatment section which is provided on the downstream side of the gas mixing device and includes a catalyst layer obtaining a synthetic gas mainly containing hydrogen and carbon oxide by partially oxidizing methane using oxygen; and a discharge section which discharges the synthetic gas from the gas treatment section.

Next, a gas mixing method according to still another invention includes the steps of: supplying one of a combustible gas and a combustion supporting gas from a gas outflow port of an inner pipe having the gas outflow port as an opening on one end side thereof; supplying the other of the combustible gas and the combustion supporting gas from a space between the inner pipe and an outer pipe which is disposed so as to surround the inner pipe and extends to the downstream side of the gas outflow port of the inner pipe; guiding the gas, flowing out from the gas outflow port of the inner pipe, outward by using a first guide member which is provided inside the outer pipe on the downstream side of the gas outflow port and is larger than an inner diameter of the inner pipe; guiding the gas, guided outward by the first guide member, toward a space formed inside the inner peripheral portion by using a second guide member which is formed in an annular shape along the inner wall of the outer pipe on the downstream side of the first guide member so that the inner peripheral portion is located closer to the upstream side than the outer peripheral portion and the inner peripheral portion is located closer to the center than the outer peripheral portion of the first guide member; and guiding the gas, guided by the second guide member, outward by a third guide member which is provided on the downstream side of the second guide member in the outer pipe.

Here, the gas mixing method may have the following characteristics.

(c) A flow velocity ratio between a flow velocity of the gas flowing through a gap between the inner pipe and the outer pipe and a flow velocity of the gas flowing through the inner pipe is equal to or more than 1.3 and equal to or less than 14.

A synthetic gas manufacturing method according to still another invention includes the steps of: mixing a gas by the gas mixing method in which the combustible gas mainly containing methane is supplied to the outer pipe and an oxygen containing gas as the combustion supporting gas is supplied to the inner pipe; obtaining a synthetic gas mainly containing hydrogen and carbon mono oxide by partially oxidizing methane contained in the synthetic gas by using a catalyst layer and oxygen; and discharging the synthetic gas.

Advantage of the Invention

According to the invention, in a gas mixing device which supplies a combustible gas and a combustion supporting gas from flow channels of a double pipe including an inner pipe and an outer pipe and mixes the gases, there are provided a first guide member which guides the gas, flowing out from a gas outflow port on one end side of the inner pipe, outward, a second guide member which is formed in an annular shape along the inner peripheral wall of the outer pipe so that the inner peripheral portion is located closer to the upstream side than the outer peripheral portion and the inner peripheral portion is located closer to the center than the outer peripheral portion of the first guide member, and a third guide member which is provided so as to face a region surrounded by the second guide member. Accordingly, the combustible gas and the combustion supporting gas flow to the downstream while intersecting, meandering, and reverse flowing. With a simple configuration in which three guide members are disposed in the stream direction of the gas so as to disperse such a stream, it is possible to sufficiently mix two types of gases.

Brief Descriptions of the Drawings

[Fig. 1] Fig. 1 is a longitudinal sectional view of a synthetic gas manufacturing apparatus adopting a gas mixing device according to an embodiment.
[Fig. 2] Fig. 2 is a cross sectional view of a gas mixer provided with the gas mixing device according to the embodiment in the inside of the synthetic gas manufacturing apparatus.
[Fig. 3] Fig. 3 is an explanatory diagram showing an arrangement pattern of the gas mixing device in the inside of the synthetic gas manufacturing apparatus.
[Fig. 4] Fig. 4 is a perspective view showing a configuration of the gas mixing device.
[Fig. 5] Fig. 5 is a longitudinal sectional view of the gas mixing device.
[Fig. 6] Fig. 6 is an explanatory diagram showing an operation of the gas mixing device.
[Fig. 7] Fig. 7 is a longitudinal side view showing a configuration of the gas mixing device according to a second embodiment.
[Fig. 8] Fig. 8 is an explanatory diagram showing an operation of the gas mixing device according to the second embodiment.
[Fig. 9] Fig. 9 is an explanatory diagram showing a configuration example of the gas mixing device according to another modified example.
[Fig. 10] Fig. 10 is an explanatory diagram showing a configuration example of the gas mixing device according to the modified example.
[Fig. 11] Fig. 11 is a first explanatory diagram showing a simulation result according to an example.
[Fig. 12] Fig. 12 is a second explanatory diagram showing a simulation result according to the example.
[Fig. 13] Fig. 13 is a third explanatory diagram showing a simulation result according to a comparative example.
[Fig. 14] Fig. 14 is a fourth explanatory diagram showing a simulation result according to the comparative example.
[Fig. 15] Fig. 15 is an explanatory diagram showing an optimal flow velocity ratio between a combustion supporting gas and a combustible gas.
[Fig. 16] Fig. 16 is a fifth explanatory diagram showing a simulation result according to the example.
[Fig. 17] Fig. 17 is a sixth explanatory diagram showing a simulation result according to the comparative example.

Mode for Carrying out the Invention

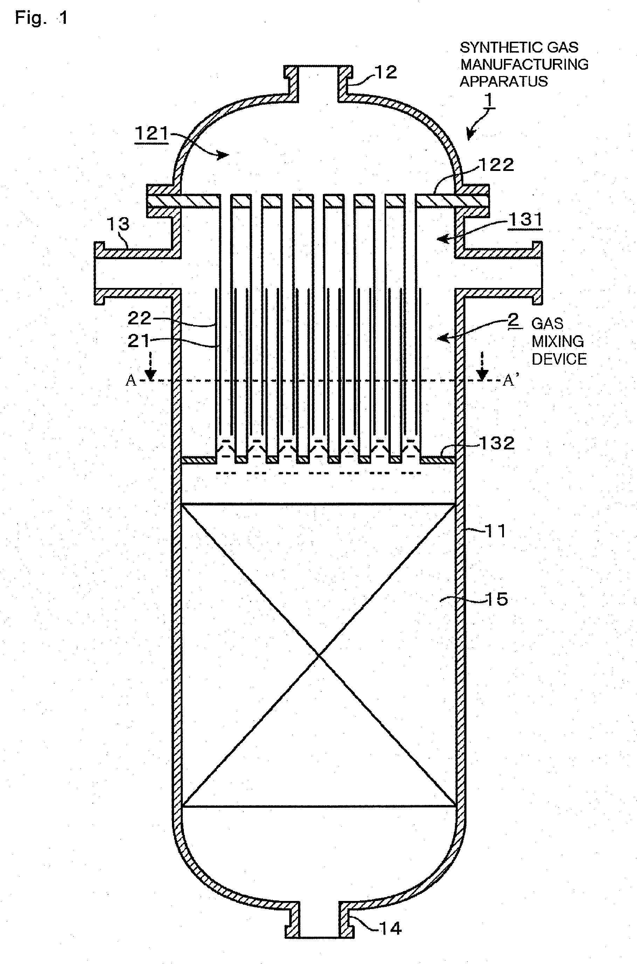

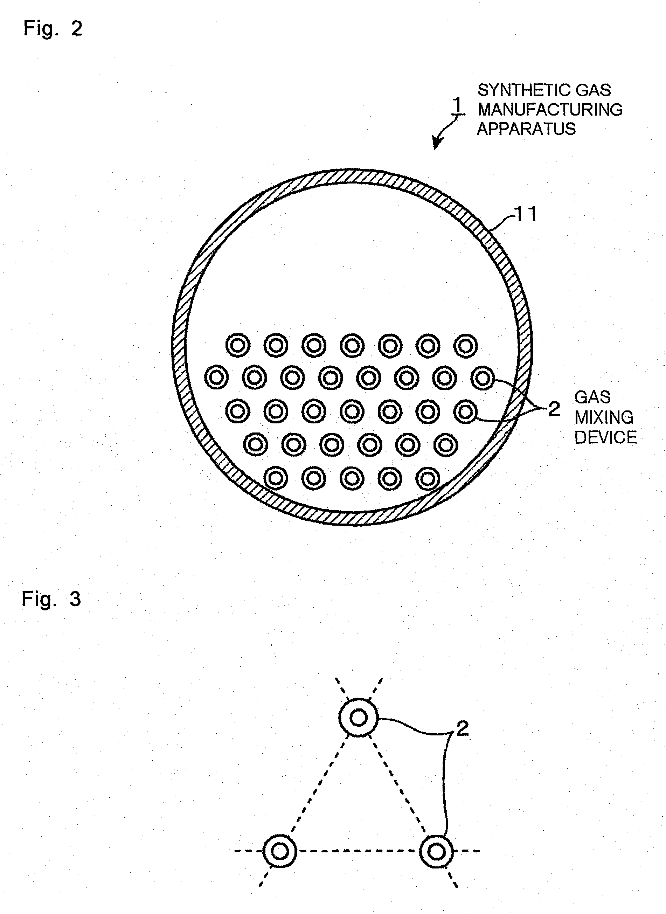

Hereinafter, an embodiment will be described in which a gas mixing device according to the invention is applied to a synthetic gas manufacturing apparatus used for obtaining a synthetic gas mainly containing hydrogen and carbon monoxide by partially oxidizing a combustible gas containing methane using a combustion supporting gas containing an oxygen containing gas. Fig. 1 is a longitudinal side view showing a schematic configuration of a synthetic gas manufacturing apparatus 1 according to the embodiment, and Fig. 2 is a cross sectional view when the synthetic gas manufacturing apparatus 1 is seen from a direction A-A'.

As shown in Fig. 1, the synthetic gas manufacturing apparatus 1 includes, for example, a cylindrical reactor 11, and the reactor 11 includes a combustion supporting gas introduction nozzle 12 which is provided in, for example, the upper end of the reactor 11 and introduces a combustion supporting gas from a supply pipe (not shown) therethrough, a combustible gas introduction nozzle 13 which is provided in, for example, the upper side wall surface of the reactor 11 and introduces a combustible gas from a supply pipe (not shown), and a gas discharge nozzle 14 which is provided in, for example, the lower end of the reactor 11 and discharges a synthetic gas synthesized inside the reactor 11.

In the inside of the reactor 11, a combustion supporting gas distribution section 121 which is a space for distributing the combustion supporting gas supplied from the combustion supporting gas introduction nozzle 12, a combustible gas distribution section 131 which is a space for distributing the combustible gas supplied from the combustible gas introduction nozzle 13, and a catalyst layer 15 which is used to perform a reaction (in this example, a partial oxidization reaction of methane) between the combustion supporting gas and the combustible gas are provided in this order from the upside. The combustion supporting gas distribution section 121 and the combustible gas distribution section 131 are divided by an inner pipe fixed plate 122 which fixes an inner pipe 21 to be described later, and the combustible gas distribution section 131 and the filling region of the catalyst layer 15 are divided by an outer pipe fixed plate 132 which fixes an outer pipe 22 to be described later.

Here, the combustible gas introduced from the combustible gas introduction nozzle 13 to the combustible gas distribution section 131 is a natural gas mainly containing methane. In addition, the combustion supporting gas introduced from the combustion supporting gas introduction nozzle 12 to the combustion supporting gas distribution section 121 is an oxygen containing gas containing, for example, 80% or more of oxygen, and is supplied so that a molar ratio ($[O_2]$/$[CH_4]$) of oxygen relative to methane supplied from the combustible gas is, for example, 0.6 in the range of, for example, 0.2 to 0.8. In addition, the combustion supporting gas contains steam, and is supplied so that a molar ratio ($[H_2O]/[CH_4]$) of steam relative to methane supplied from the combustible gas is, for example, 0.6 in the range of, for example, 0.2 to 0.8.

Then, in the inside of the combustible gas distribution section 131, a group of gas mixing devices 2 according to the embodiment is arranged. As shown in Fig. 2, in the reactor 11, the cross section thereof is divided by, for example, plural regular triangle blocks shown in Fig. 3, and the gas mixing devices 2 are respectively arranged at the tops of the blocks. In addition, the mixing between the combustible gas and the combustion supporting gas is performed in the inside of each of the gas mixing devices 2. As described above, since the combustion supporting gas distribution section 121, the combustible gas distribution section 131, and the filling region of the catalyst layer 15 are divided from each other, the combustible gas introduced into the combustible gas distribution section 131 and the combustion supporting gas introduced into the combustion supporting gas distribution section 121 always pass through the gas mixing device 2 so as to be mixed, and are supplied to the catalyst layer 15 in the state of a mixed gas. In addition, for convenience, a part of the gas mixing device 2 in Fig. 2 is omitted, but actually, the gas mixing devices 2 are arranged in the entire cross section of the reactor 11.

The catalyst layer 15 serves as a gas treatment section which is provided on the downstream side of the gas mixing device 2 and treats the gas mixed in the inside of the gas mixing device 2. The catalyst layer 15 is filled with a catalyst in which metal such as platinum is dispersed and carried on a surface of alumina burned in a pellet shape, and the catalyst is supported by a support member (not shown). In the inside of the catalyst layer 15, contact portion oxidization is performed by simultaneously performing, for example, a complete oxidization reaction shown in the formula (1), a steam reforming reaction shown in the formula (2), and a reverse shift reaction shown in the formula (3), and a gas treatment for manufacturing the synthetic gas is performed.

$$CH_4 + 2O_2 \rightarrow CO_2 + 2H_2O \qquad (1)$$

$$CH_4 + H_2O \rightarrow CO + 3H2 \qquad (2)$$

$$CO_2 + H_2O \rightarrow CO + H_2 \qquad (3)$$

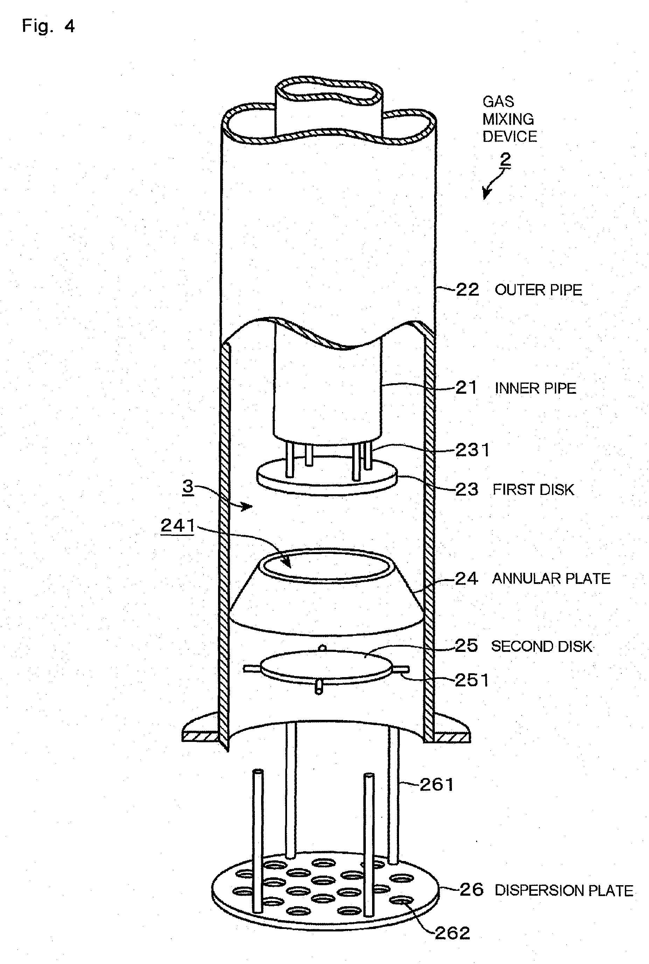

The synthetic gas manufacturing apparatus 1 has the above-described configuration, and the mixed gas obtained by uniformly mixing the combustible gas and the combustion supporting gas is supplied to the catalyst layer 15. However, as described in the background art, since the mixed gas obtained immediately after mixing the combustible gas and the combustion supporting gas has a region where a combustion reaction easily occurs, it is necessary to mix these gases as promptly as possible and to supply the mixed gas to the catalyst layer 15. Therefore, the plural gas mixing devices 2 provided in the synthetic gas manufacturing apparatus 1 according to the embodiment have a function of promptly performing the uniform mixing of these gases with a comparatively simple configuration. Hereinafter, by referring to Figs. 4 to 6, a detailed configuration of the gas mixing device 2 according to the embodiment will be described.

The plural gas mixing devices 2 provided in the inside of the combustible gas distribution section 131 substantially have the same configuration, and is provided in a circular pipe (an outer pipe 22 to be described later) which extends in the vertical direction as shown in Fig. 4. In detail, the gas mixing device 2 includes an inner pipe 21 which allows the combustion supporting gas to flow therethrough, an outer pipe 22 which is disposed in the periphery of the inner pipe 21 so as to form a double pipe and to allow the combustible gas to flow therethrough and forms a mixing space 3 of two gases, a first disk 23 as a first guide member which is disposed inside the mixing space 3 and prompts the mixing of two gases, an annular plate 24 as a second guide member, and a second disk 25 as a third guide member.

The outer pipe 22 is a circular pipe having, for example, a diameter of several cm to several tens of cm and a length of several tens of cm to several hundreds of cm, and as shown in Fig. 1, the upper end is opened from the inside of the combustible gas distribution section 131. On the other hand, the lower end of the outer pipe 22 is fixed to the outer pipe fixed plate 132 which divides the combustible gas distribution section 131 and the filling region of the catalyst layer 15, and is opened toward the filling region of the catalyst layer 15 at a position fixed to the outer pipe fixed plate 132. Here, a structure may be used in which the upper end of the outer pipe 22 is provided with the fixed plate of the outer pipe 22, but in this case, in consideration of the extension or the like of the outer pipe 22 due to a high temperature of the catalyst layer 15, the fixed plate of the upper end may be adapted to be movable, for example, in the vertical direction.

The inner pipe 21 is a circular pipe having, for example, a diameter smaller than that of the outer pipe 22 by several cm to several tens of cm, and forms a double pipe while being inserted into the outer pipe 22 in the axial direction. As shown in Fig. 1, the upper portion of the inner pipe 21 extends more to the upper side than the upper end of the outer pipe 22 so as to penetrate the inside the combustible gas distribution section 131, where the upper end thereof is fixed to the inner pipe fixed plate 122 which divides the combustion supporting gas distribution section 121 and the combustible gas distribution section 131, and the upper end is opened from the inside of the combustion supporting gas distribution section 121. On the other hand, the lower portion of the inner pipe 21 extends downside to a height position of about 80 to 90 percent from the upper end of the outer pipe 22, and the lower end is opened from the inside of the outer pipe 22 so as to form an outflow port 311 of the combustion supporting gas.

Likewise, when the double pipe structure having the inner pipe 21 and the outer pipe 22 is adopted, it is possible to separately supply the combustion supporting gas flowing through a space (hereinafter, referred to as a combustion supporting gas flow channel 31) in the inside of the inner pipe 21 and the combustible gas flowing through a cylindrical space (hereinafter, referred to as a combustible gas flow channel 32) between the inner pipe 21 and the outer pipe 22. In addition, a space in the inside of the outer pipe 22 on the lower side of the combustion supporting gas outflow port 311 opening from the inside of the outer pipe 22 is formed as the mixing space 3 of the combustible gas and the combustion supporting gas. In this case, a combustible gas outflow port 321 from the combustible gas flow channel 32 is also provided at the same height position as that of the above-described combustion supporting gas outflow port 311.

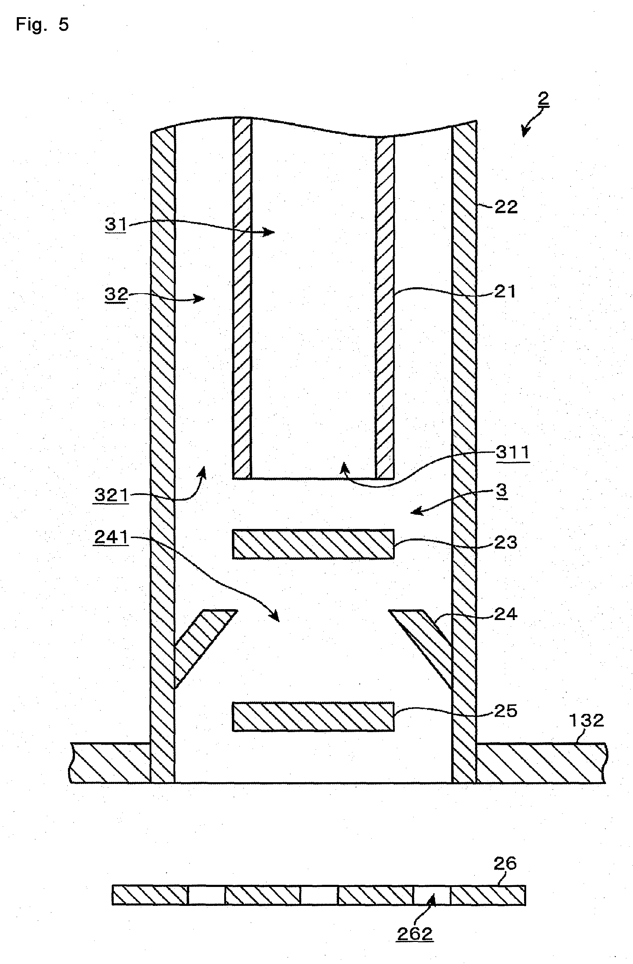

The mixing space 3 is a space which is formed in a region of, for example, a dozen cm to several tens of cm on the lower end side of the outer pipe 22, and the inside of the mixing space 3 is provided with a first disk 23, an annular plate 24, and a second disk 25 are provided in this order from the upstream side. As shown in Figs. 4 and 5, the first disk 23 is, for example, a disk-shaped member which has, for example, a diameter larger than an inner diameter of the inner pipe 21 and smaller than an inner diameter of the outer pipe 22, and is disposed at a position of several cm to several tens of cm on the downstream side of the combustion supporting gas outflow port 311 with a gap interposed between itself and the outflow port 311. In addition, in this example, the first disk 23 is disposed so that a plate surface thereof is substantially perpendicular to the axis of the inner pipe 21.

In addition, when the first disk 23 is seen from the bottom thereof, for example, the first disk is disposed at a position (a position where the position of the outer peripheral portion of the first disk 23 is on the outside of the inner peripheral surface of the inner pipe 21) covering the entire opening of the inner pipe 21. Accordingly, the stream of the combustion supporting gas flowing out from the upstream side of the first disk 23, that is, the combustion supporting gas outflow port 311 is guided outward (the direction of the inner wall of the outer pipe 22) in a direction perpendicular to the stream direction. In this example, for example, as shown in Fig. 4, the first disk 23 is fixed to the lower end of the inner pipe 21 through support bars 231.

The annular plate 24 as an annular member is disposed at a position of, for example, several cm to several tens of cm on the downstream side of the first disk 23 so as to have an outer peripheral surface which is formed in a taper shape expanded toward the tip side thereof from the upstream side to the downstream side and an inner peripheral portion which is located closer to the upstream side than an outer peripheral portion. The annular plate 24 is formed to have a height from the upper end to the lower end of about several cm to several tens of cm, where the outer peripheral portion of the lower end side is fixed to the inner surface of the outer pipe 22, and the upper end side is provided with, for example, a circular opening 241 opened toward the first disk 23.

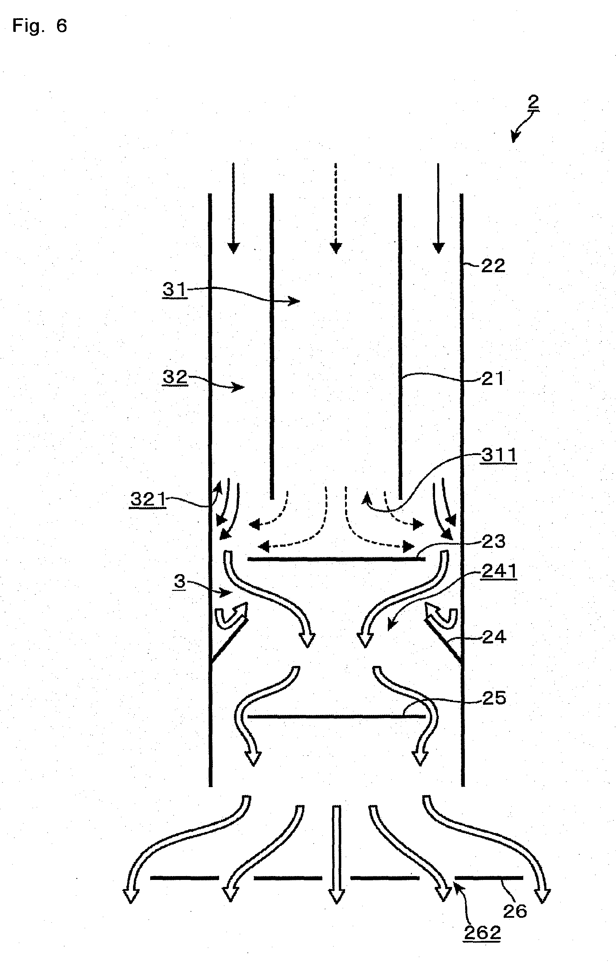

As shown in Figs. 5 and 6, the opening 241 has an opening diameter which is equal to or smaller than a diameter of the first disk 23. When the annular plate 24 is seen from the bottom thereof, the first disk 23 and the annular plate 24 are disposed so as to have a positional relationship (a position where the position of the inner peripheral portion of the annular plate 24 is located closer to the center than the outer peripheral portion of the first disk 23) in which the entire opening 241 is covered by the first disk 23. In addition, in this example, since the annular plate 24 is formed as a plate member, the inner peripheral surface of the annular plate 24 also has a surface expanded toward the tip side thereof from the upper end side to the lower end side.

The second disk 25 formed in a disk shape and having the same configuration as that of, for example, the first disk 23 is disposed at a position of, for example, several cm to several tens of cm on the downstream side of the annular plate 24, and is disposed while facing a region surrounded by the annular plate 24 so that the stream direction of the mixed gas passing through the annular plate 24 toward the second disk 25 is guided outward in a direction perpendicular to the stream direction. In this example, for example, as shown in Fig. 4, the second disk 25 is fixed to the inner wall surface of the outer pipe 22 through support bars 251.

The mixing space 3 provided with the first disk 23, the annular plate 24, end the second disk 25 is opened toward the catalyst layer 15 at a position of, for example, several cm to several tens of cm on the lower side of the second disk 25. In addition, a dispersion plate 26 having plural dispersion holes 262 is provided at a position of, for example, a dozen cm to several tens of cm on the downstream side of the opening end of the outer pipe 22, and the mixed gas flowing out from the lower end of the outer pipe 22 is dispersed at the dispersion holes 262 so as to be uniformly supplied toward the filling region of the catalyst layer 15. In the drawing, the reference numeral 261 denotes a support bar which supports the dispersion plate 26 at the lower end of the outer pipe 22.

Here, the inner and outer diameters of the inner pipe 21, the inner diameter of the outer pipe 22, or the number of the gas mixing devices 2 installed in the inside of the reactor 11 are designed so that the flow velocity of the combustion supporting gas with respect to the flow velocity of the combustible gas flowing through the inside of the flow channels 31 and 32 "the combustion supporting gas flow velocity/the combustible gas flow velocity [-]" is in the range of, for example, 1.3 to 14 and is desirably in the range of 2.5 to 14 in the total supply amounts of the combustible gas and the combustion supporting gas supplied from the combustion supporting gas introduction nozzle 12 and the combustible gas introduction nozzle 13. In this example, an example is described which has a uniform cross section region perpendicular to the stream direction where the gas flows out from the inlet of each gas to the mixing space 3 through the outlet of each of the flow channels 31 and 32. However, for example, in the case where the cross section region is changed, as the flow velocity of each gas, the flow velocity at the outlet through which the gas flows out toward the mixing space 3 may be adopted.

Each of the gas mixing devices 2 provided in the synthetic gas manufacturing apparatus 1 according to the embodiment has the above-described configuration, and is capable of promptly mixing the combustible gas with the combustion supporting gas and of suppressing a region of a mixing state having a large combustion speed to be comparatively small. Hereinafter, operations of the synthetic gas manufacturing apparatus 1 and the gas mixing device 2 according to the embodiment will be described.

At this time, when the combustible gas mainly containing methane is introduced into the synthetic gas manufacturing apparatus 1 through the combustible gas introduction nozzle 13 from a gas reforming device of the front stage, the combustible gas is distributed into the combustible gas distribution section 131, and flows while being dispersed into the combustible gas flow channel 32 through the upper end of the outer pipe 22 opened from the inside of the combustible gas distribution section 131. On the other hand, the combustion supporting gas introduced from the combustion supporting gas introduction nozzle 12 is distributed into the combustion supporting gas distribution section 121, and flows while being dispersed into the inner pipe 21 (the combustion supporting gas flow channel 31) opened from the inside of the combustion supporting gas distribution section 121.

In the inside of each of the gas mixing devices 2, as schematically shown in the longitudinal side view of Fig. 6, the combustion supporting gas (which is depicted by the dashed arrow in the drawing) flowing into the combustion supporting gas flow channel 31 flows from the combustion supporting gas outflow port 311 into the mixing space 3. In addition, the combustible gas (which is depicted by the solid arrow in the drawing) flowing into the combustible gas flow channel 32 flows from the annular combustible gas outflow port 321 into the mixing space 3.

The combustion supporting gas flowing into the mixing space 3 is guided to a direction intersecting the stream direction, that is, an outward direction of the first disk 23 by the first disk 23 provided on the lower side of the combustion supporting gas outflow port 311. On the other hand, the combustible gas flowing into the mixing space 3 flows down along the inner wall of the outer pipe 22 in the inside of the mixing space 3, and the combustion supporting gas guided by the first disk 23 merges so as to intersect the stream of the combustible gas, where the mixing of both gases is performed.

In addition, in the region where the mixing of the combustible gas and the combustion supporting gas is performed, since the first disk 23 is disposed at the center in the inside of the mixing space 3, these gases flow to an annular narrow flow channel formed between the outer peripheral portion of the first disk 23 and the inner wall surface of the outer pipe 22, and at this time, the gas flow velocity increases. Then, when the gases pass through the annular flow channel, the gas flow velocity decreases, and the gas flow velocity increases again when the gases flow into the opening 241 of the annular plate 24. In addition, in the gas colliding with the outer peripheral surface forming a taper shape of the annular plate 24, the stream thereof is first guided so as to reversely flow toward the upstream side, and the gas flows into the opening 241 of the annular plate 24.

At this time, in both gases, the gas flow velocity repeats "increase → decrease → increase". In addition, after the gas passes through the outside of the outer peripheral portion of the first disk 23, the gas flows into the opening 241 of the annular plate 24 so that the stream direction largely meanders and the gas reversely flowing in the taper surface of the annular plate 24 merges in a direction intersecting the stream direction of the meandering gas. Likewise, the fluid state is significantly changed. In addition, since a local vortex or the like occurs due to the change of the fluid state, the mixing of both gases is promoted.

At this time, as shown in a simulation result of an example to be described later, for example, when the mixing state of the combustible gas and the combustion supporting gas in the inside of the mixing space 3 is seen in a direction crossing the outer pipe 22 at a middle height position of the first disk 23 and the annular plate 24, the mixing of two gases is progressed at the axis of the outer pipe 22, but the combustible gas which is not mixed yet remains in the vicinity of the inner wall surface of the outer pipe 22. However, in Fig. 6, for convenience of the drawing, only the stream of the mixed gas is depicted by the white arrow.

When returning to the description of the stream of the mixed gas, since the second disk 25 is provided below the annular plate 24, the mixed gas passing through the annular plate 24 is again guided in the outward direction of the disk 25 so as to intersect the stream direction after passing through the annular plate 24 by the second disk 25, and passes through the outside side peripheral portion of the second disk 25. In addition, even at this time, the gas flow velocity repeats "decrease → increase → decrease" and the meandering gas stream is repeated, so that the mixing of two gases is progressed.

Here, for example, the combustion reaction between methane and oxygen is progressed on the basis of the following formula (4), and in the case where a molar ratio of the molecule is mixed in the stoichiometric proportion shown in the formula (4), the combustion speed becomes the largest.

$$CH_4 + 2O_2 \rightarrow CO_2 + 2H_2O \qquad (4)$$

Therefore, in this kind of gas mixing device, it is desirable to have a mixing state of a molar ratio deviated from the stoichiometric proportion of the combustion reaction by performing the mixing of both gases as promptly as possible.

For this reason, in the gas mixing device 2 according to the embodiment, from a simulation result to be described later, it is proved that it is possible to decrease a region having the mixing state substantially identical to the stoichiometric proportion of the combustion reaction of both gases, for example, compared with the case in which an annular plate including the inner and outer peripheral portions having the same height position and not including the taper surface is disposed between two sheets of disks 23 and 24 instead of the annular plate 24 including the taper surface.

Likewise, the mixed gas passing through the mixing space 3 and being in a substantially uniform state flows out from the opening of the lower end of the outer pipe 22 toward the downside, passes through the dispersion holes 262 of the dispersion plate 26 provided below the opening so as to be dispersed, and is supplied toward the catalyst layer 15 in the state where the concentration of the mixed gas in the cross section of the reactor 11 is uniform.

Here, for example, as an index representing the degree of the mixing of the combustible gas and the combustion supporting gas in the mixed gas, the mixing degree of both gases in a region having a unit of volume is defined as the following expression (5).

$$Mixing\ degree = \{(maximum\ value\ of\ oxygen\ molar\ ratio / minimum\ value\ of\ oxygen\ molar\ ratio) - 1\} \times 100/2\ [\%]\ ...\ (5)$$

The mixing degree becomes a smaller value so as to be closer to 0% as it becomes the complete mixing state.

Here, the mixed gas supplied from the gas mixing device 2 to the catalyst layer 15 has a temperature of, for example, about 200°C, and a temperature of the catalyst layer 15 is 1,400°C. In addition, it is desirable that the mixed gas flowing out from the gas mixing device 2 (outer pipe 22) is in a state where the combustion hardly occurs, that is, a state in which the mixed gas is sufficiently mixed so as to be deviated from the stoichiometric proportion of the combustion reaction so that the combustion reaction of the gas mixing device 2 is not progressed even when the high-temperature mixed gas reversely flows. For this reason, in the case of manufacturing the synthetic gas by using the catalytic partial oxidation method, it is necessary to make the mixing degree to be 10% or less and desirably 5% or less.

The present inventors have found that the flow velocity ratio "combustion supporting gas flow velocity/combustible gas flow velocity [-]" when the combustible gas and the combustion supporting gas flow into the mixing space 3 largely influences a factor for determining the mixing degree of the mixed gas flowing out from the gas mixing device 2. In addition, as shown in an example to be described later, from the simulation result, it is found that the flow velocity ratio is set to 1.3 or more in order to allow the mixing degree at the outlet of the gas mixing device 2 to be 10% or less, and the flow velocity ratio is set to 2.5 or more in order to allow the mixing degree to be 5% or less.

In addition, as the flow velocity ratio becomes larger, the mixing degree of the outlet of the gas mixing device 2 can be closer to 0% of the complete mixing state. However, when the flow velocity ratio becomes too large, the reverse flow of the taper surface of the annular plate 24 becomes large, and hence the reverse flow stream flows into, for example, the combustible gas flow channel 321. When such a reverse flow occurs, it is not desirable in that there is a high possibility of causing the mixing state of the stoichiometric proportion in which the combustion speed becomes the largest in the inside of the combustible gas flow channel 321 into which the reversely flowing gas flows. From such a result of the examination, it is desirable that the gas mixing device 2 is designed and operated so that the flow velocity ratio between the combustible gas and the combustion supporting gas is in the range of 1.3 to 14, and desirably in the range of 2.5 to 14.

The mixed gas passing through the plural gas mixing devices 2 provided inside the synthetic gas manufacturing apparatus 1 through the above-described processes and having a uniform concentration is supplied to the catalyst layer 15. In addition, in the inside of the catalyst layer 15, the partial oxidization reaction shown in the formula (1) is progressed, the synthetic gas is created, and the obtained synthetic gas is discharged from the synthetic gas discharge nozzle 14. Here, since most of the mixed gas causes a reaction in a region close to the inlet of the catalyst layer 15, the temperature in the vicinity of the inlet is the highest so as to be, for example, 1,400°C, and the temperature on the downstream side thereof is set to be, for example, in the range of 1,000°C to 1,100°C.

In the gas mixing device 2 according to the embodiment, there are the following advantages. In the gas mixing device 2 which supplies the combustible gas and the combustion supporting gas from the flow channels 31 and 32 in the inside of the double pipe including the inner pipe 21 and the outer pipe 22 and mixes the gases, there are provided the first disk 23 which guides the gas, flowing out from the combustion supporting gas outlet port 311 on one end side of the inner pipe 21, outward, the annular plate 24 which is formed in an annular shape along the inner peripheral wall of the outer pipe 22 so that the inner peripheral portion is located closer to the upstream side than the outer peripheral portion and the inner peripheral portion is located closer to the center than the outer peripheral portion of the first disk 23, and the second disk 25 which is provided so as to face a region surrounded by the annular plate 24. Accordingly, the combustible gas and the combustion supporting gas flow to the downstream while intersecting, meandering, and reverse flowing. With a simple configuration in which three guide members (the first and second disks 23 and 25 and the annular plate 24) are disposed in the stream direction of the gas so as to disperse such a stream, it is possible to sufficiently mix two types of gases.

Particularly, since the annular plate 24 as the second guide member is disposed so that the inner peripheral portion is located closer to the upstream side than the outer peripheral portion and the inner peripheral portion is closer to the center than the outer peripheral portion of the first disk 23, it is possible to first reverse the stream of the gas flowing toward the outer peripheral surface. Accordingly, it is possible to decrease a region in which the mixing state of both gases is substantially identical to the stoichiometric proportion of the combustion reaction compared with the case in which the annular plate is formed as a flat plate, so that the combustion reaction is hardly progressed.

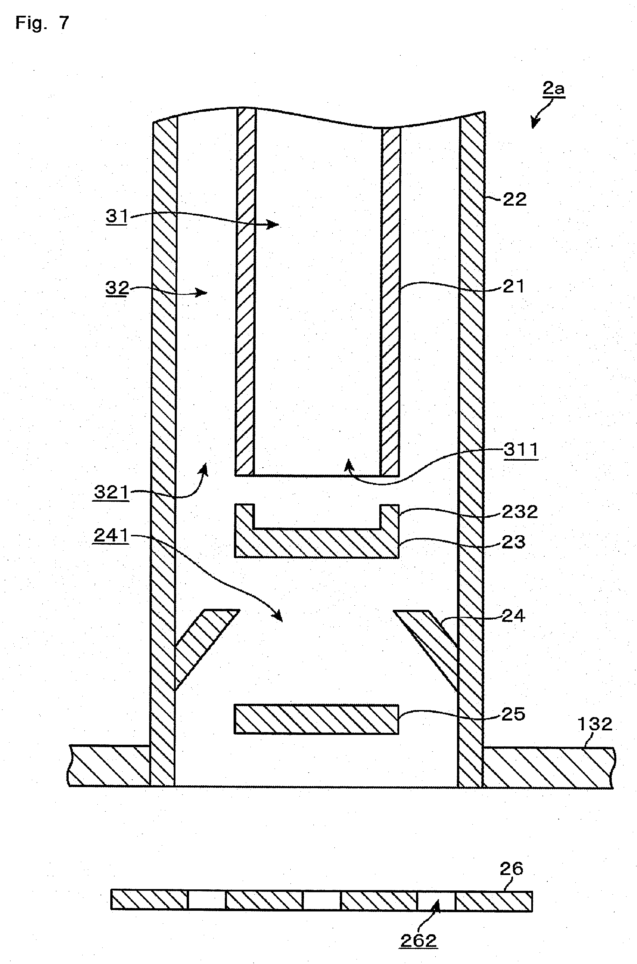

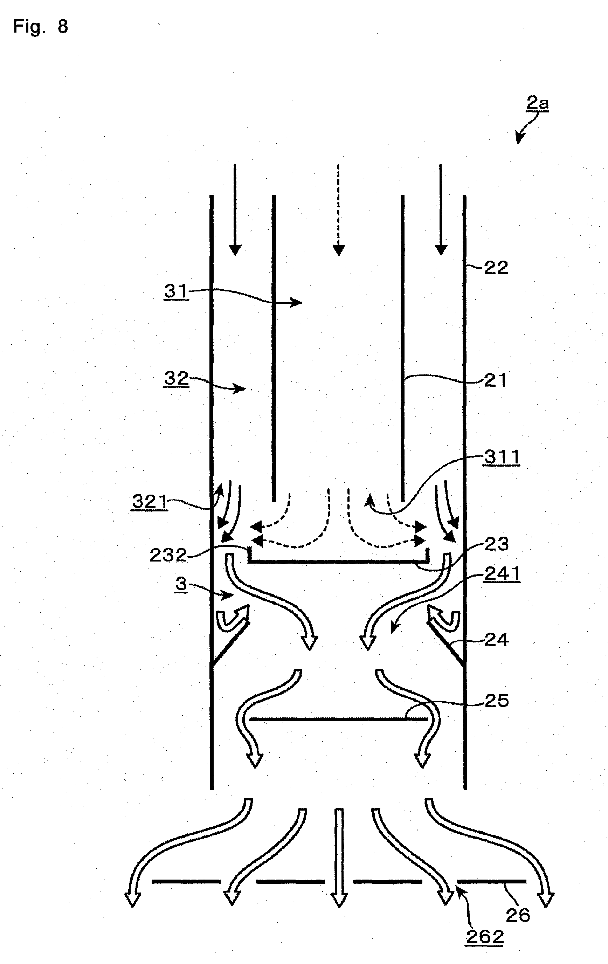

In various guide members (the disks 23 and 25 and the annular plate 24), means for guiding the stream of the gas in a reverse flow direction are not limited to the case in which the taper surface is formed in the outer peripheral surface of the annular plate 24 as shown in the above-described embodiments. For example, as in the gas mixing device 2a shown in Figs. 7 and 8, a protrusion 232 may be provided in the peripheral edge of the first disk 23 so as to first block the gas flowing on the surface of the first disk 23. When the protrusion 232 is provided, the gas blocked by the protrusion 232 first reversely flows in a direction opposite to the outflow direction of the combustion supporting gas from the inner pipe 21, and is guided to the outside of the side peripheral portion of the first disk 23, thereby promoting the mixing in the process of the reverse flow.

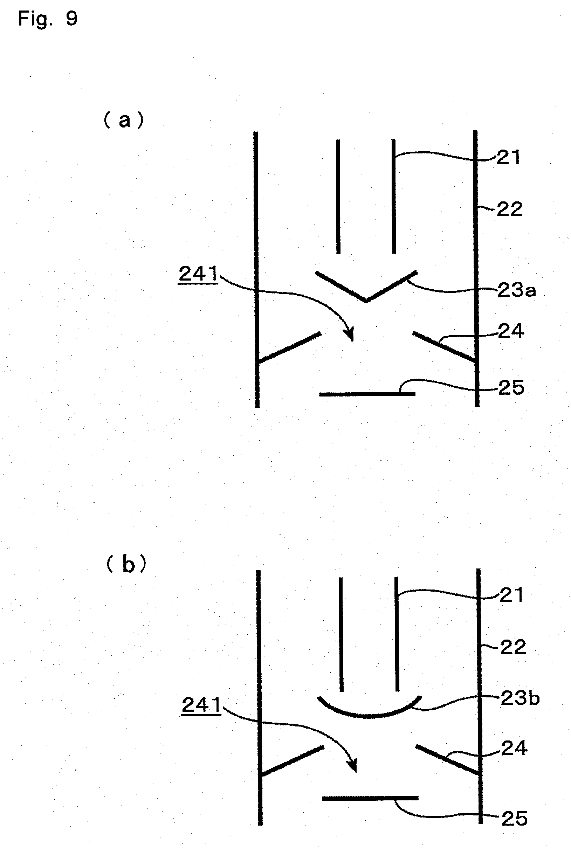

In addition, instead of the first disk 23 including the protrusion 232 shown in Figs. 7 and 8, for example, as shown in Fig. 9(a), the first disk 23a is formed in an inverse conical shape which has a taper-shaped inner peripheral surface by expanding the first disk 23a from the lower side to the upper side. Here, the combustion supporting gas may first reversely flow in a direction opposite to the outflow direction from the inner pipe 21. In addition, as shown in Fig. 9 (b), even when the first disk 23b is formed in a bowl shape, the same operation may be obtained.

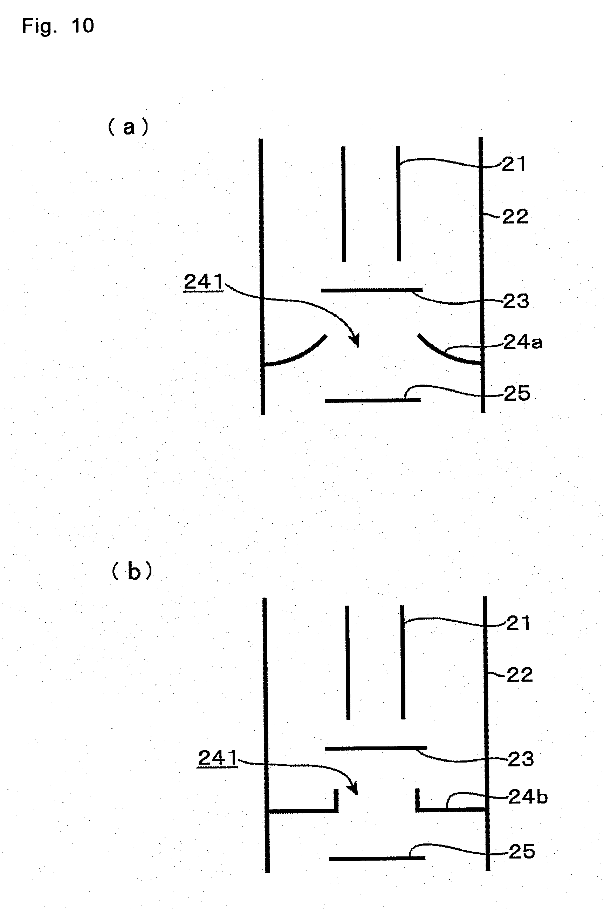

Further, for example, in the annular plate as the second guide member, a configuration in which the inner peripheral portion is located closer to the upstream side than the outer peripheral portion is not limited to the case in which the annular plate 24 is formed in a taper shape so as to be expanded to the tip thereof toward the downstream side as shown in Fig. 5. For example, the taper surface may be curved as in the annular plate 24a shown in Fig. 10(a), and a protrusion may be provided along the peripheral edge of the opening 241 as a horizontal guide member as in the annular plate 24b shown in Fig. 10(b).

In the above-described embodiments and modified examples, a configuration is adopted in which the combustion supporting gas flows through the inner pipe 21, and the combustible gas flows through the space between the inner pipe 21 and the outer pipe 22. In fact, from the viewpoint of safety, it is thought that it is desirable to supply the gases from the flow channels to the mixing space 3. However, the invention, of course, includes a case in which the combustible gas flows through the inner pipe 21, and the combustion supporting gas flows through the space between the inner pipe 21 and the outer pipe 22 so as to be supplied to the mixing space 3 on the ground of a particular reason.

[Example]

(Simulation 1)

A simulation model of a CFD (Computational Fluid Dynamics) is created so as to correspond to actual sizes of the gas mixing devices 2 and 2a shown in Figs. 5 and 7, and the mixing state of the combustion supporting gas and the combustible gas in the inside of the devices 2 and 2a is compared with other types of gas mixing devices.

A. Simulation Condition

(Example 1-1)

A model of the gas mixing device 2 shown in Fig. 5 was created, and a simulation of the gas mixing state was performed. A simulation condition was as below.
Combustible Gas: Natural Gas and Inflow Speed of 7.17 m/s into Mixing Space 3
Combustion Supporting Gas: 100% of Oxygen and Inflow Speed of 26.46 m/s into Mixing Space 3
Flow Velocity Ratio: 3.69

(Example 1-2)

A model of the gas mixing device 2a shown in Fig. 7 was created, and a simulation of the gas mixing state was performed. A simulation condition was the same as that of the "example 1-1".

(Comparative Example 1-1)

A model of the gas mixing device including only the first disk 23 (without the annular plate 24 and the second disk 25) was created, and a simulation of the gas mixing state was performed. A simulation condition was the same as that of the "example 1-1".

(Comparative Example 1-2)

A model of the gas mixing device including a horizontal annular plate in addition to the first and second disks 23 and 25 was created, and a simulation of the gas mixing state was performed. A simulation condition was the same as that of the "example 1-1".

B. Simulation Result

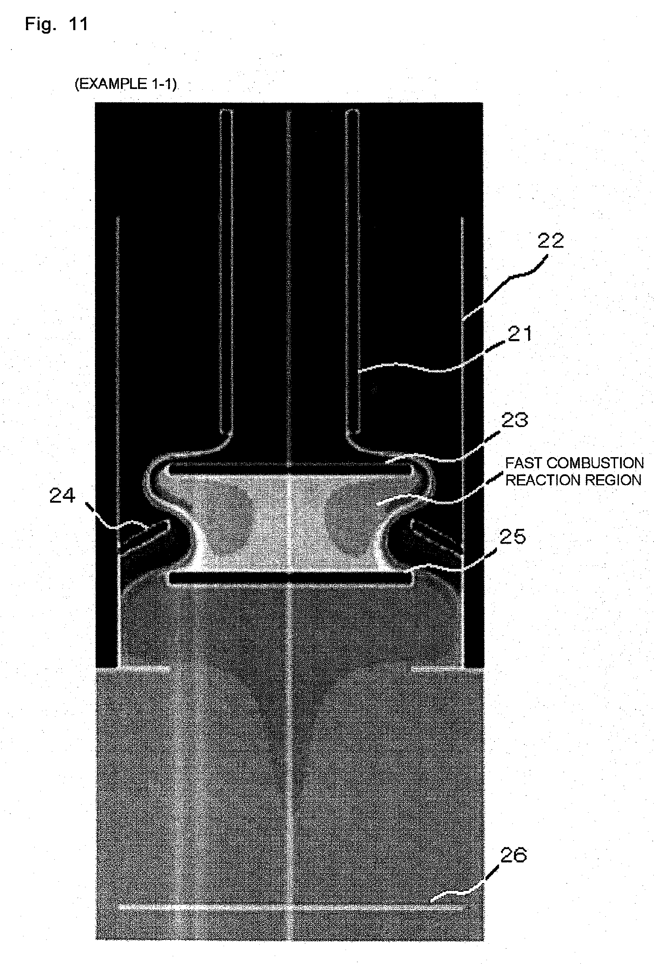

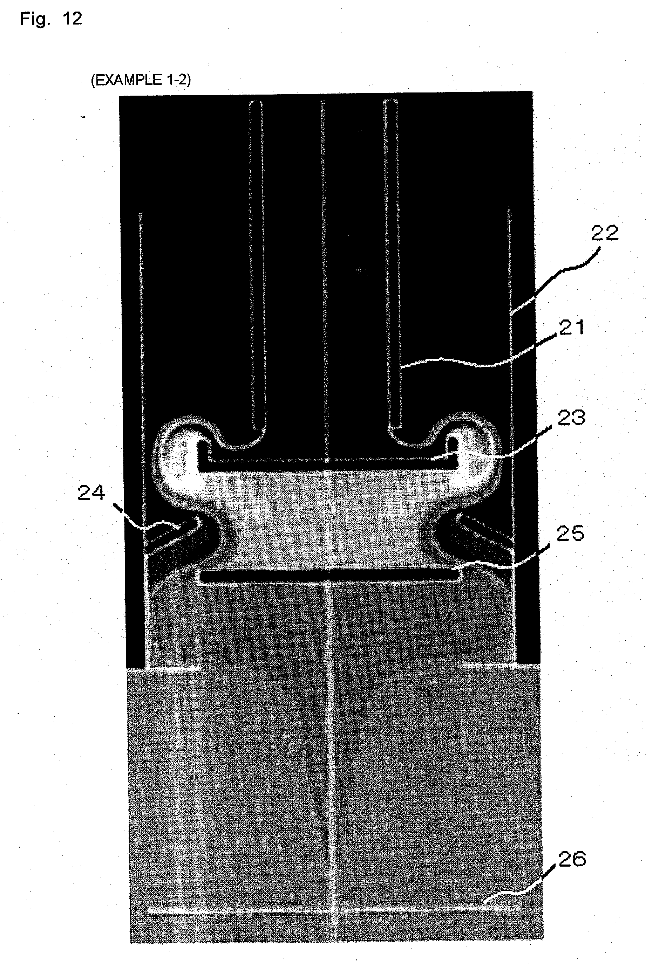

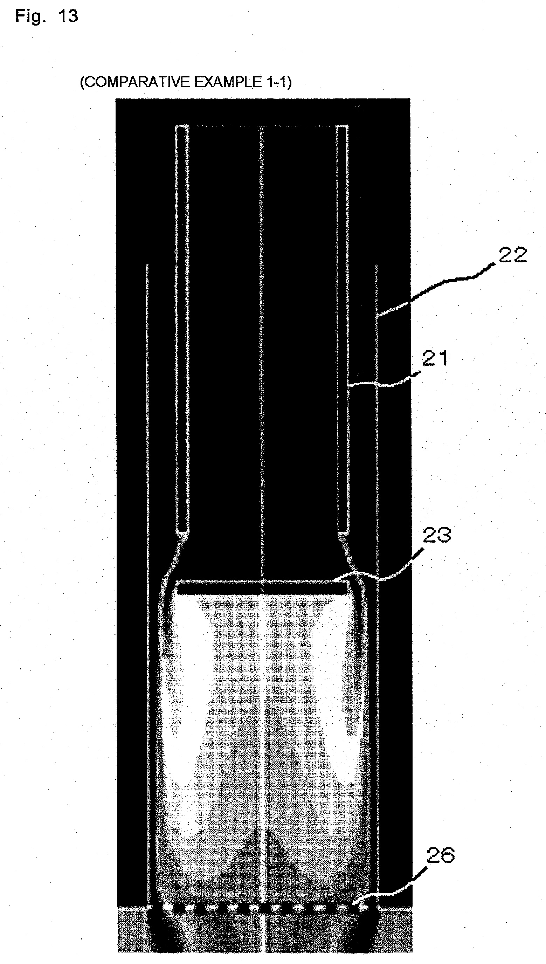

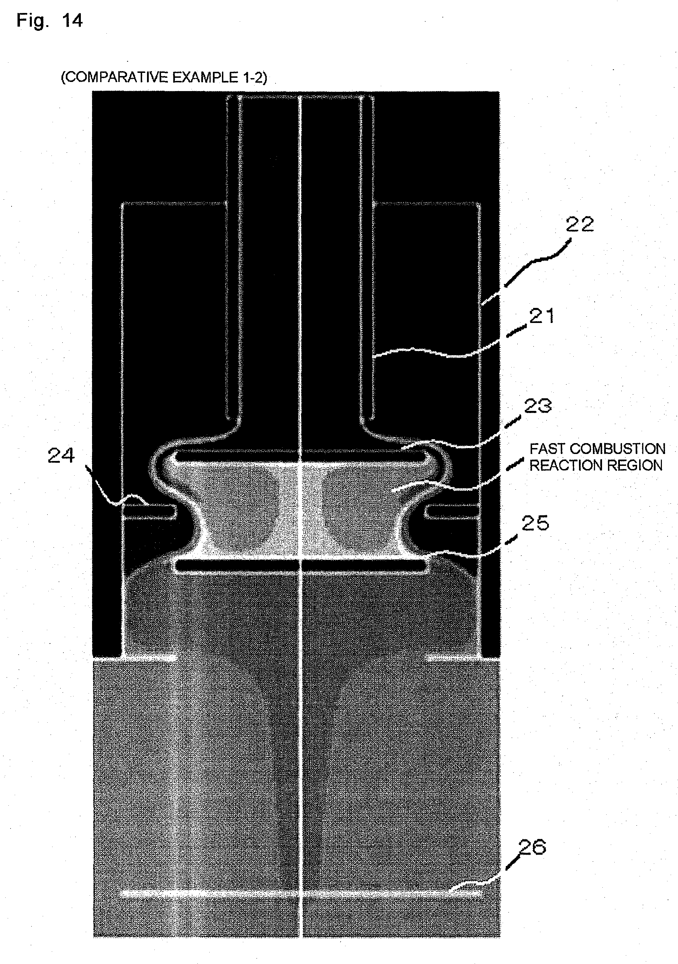

The simulation results of the examples are shown in Figs. 11 and 12, and the results of the comparative examples are shown in Figs. 13 and 14. In the drawings, the concentration range of 0 vol% to 100 vol% of the oxygen gas is divided by color every 5 vol%, and a color output drawing displayed as color corresponding to the oxygen gas concentration inside the gas mixing device is converted into a gray scale.
In any one of the "examples 1-1 and 1-2", the mixing degrees of the dispersion plate 26 are 2.7% and 5% or less, and the satisfactory mixing state is obtained. In addition, in the "example 1-1", the mixing ratio between oxygen and a natural gas is set to the stoichiometric proportion of the combustion reaction, and a fast combustion reaction region is observed. However, an area of the region is small compared with the "comparative example 1-2" described later, and the inner peripheral portion of the annular plate 24 is formed so as to be located closer to the upstream side than the outer peripheral portion, thereby exhibiting an advantage of reversing the stream.
On the other hand, in the "example 1-2", the fast combustion reaction region is hardly observed, and the mixing of the gas is the fastest among the examples and the comparative examples. For this reason, when a protrusion 232 is provided in the first disk 23 in addition to the taper surface of the annular plate 24, it is possible to further promote the mixing of the gas.
In the "comparative example 1-1" compared with the examples, the mixing degree of the dispersion plate 26 is 450%, and the mixing state is not sufficient compared with the above-described example. In addition, since almost 100% of a natural gas flows out to the dispersion plate 26 along the pipe wall of the outer pipe 22, it is not desirable to supply such a gas to the catalyst layer 15.
On the other hand, in the "comparative example 1-2", the mixing degree of the dispersion plate 26 is 3.6%, and the mixing state is not good compared with the examples. In addition, an area of the fast combustion reaction region is large compared with the "example 1-1". For this reason, as in the example, it is desirable that the outer peripheral surface of the annular plate 24 is formed in a taper shape, and the inner peripheral portion of the annular plate 24 is located closer to the upstream side than the outer peripheral portion.

(Simulation 2)

By changing the flow velocity ratio between the combustible gas and the combustion supporting gas using the simulation model of the "example 1-1" corresponding to the gas mixing device 2 of Fig. 5, the mixing degree of the dispersion plate 26 and the fluid state inside the gas mixing device 2 were observed.

A. Simulation Condition

The flow velocities of the combustion supporting gas and the combustible gas at the gas outflow ports 311 and 321 according to the examples and the comparative examples, and the flow velocity ratio between both gases are shown in "Table 1". The flow velocity ratio increases in an order of the "comparative examples 2-1 and 2-2" → the "examples 2-1 to 2-7" → the "comparative examples 2-3 and 2-4". In addition, since the numerical values marked in "Table 1" are obtained by rounding off the numbers to one decimal place of the actual calculation result, even when the flow velocity ratio is calculated on the basis of the values, there is a case in which the calculation result is not precisely identical to the flow velocity ratio marked in "Table 1".

(Table 1)

|  | COMBUSTION SUPPORTING GAS FLOW VELOCITY [m/s] | COMBUSTIBLE GAS FLOW VELOCITY [m/s] | FLOW VELOCITY RATIO [-] |
|---|---|---|---|
| Example 2-1 | 13.4 | 10.4 | 1.3 |
| Example 2-2 | 13.5 | 7.3 | 1.8 |
| Example 2-3 | 26.5 | 7.2 | 3.7 |
| Example 2-4 | 26.9 | 3.7 | 7.4 |
| Example 2-5 | 25.7 | 3.0 | 8.7 |
| Example 2-6 | 25.8 | 2.5 | 10.5 |
| Example 2-7 | 25.8 | 1.9 | 14.0 |
| Comparative Example 2-1 | 2.7 | 7.4 | 0.4 |
| Comparative Example 2-2 | 5.5 | 7.4 | 0.7 |
| Comparative Example 2-3 | 27.2 | 1.5 | 18.5 |
| Comparative Example 2-4 | 27.3 | 0.7 | 36.9 |

B. Simulation Result

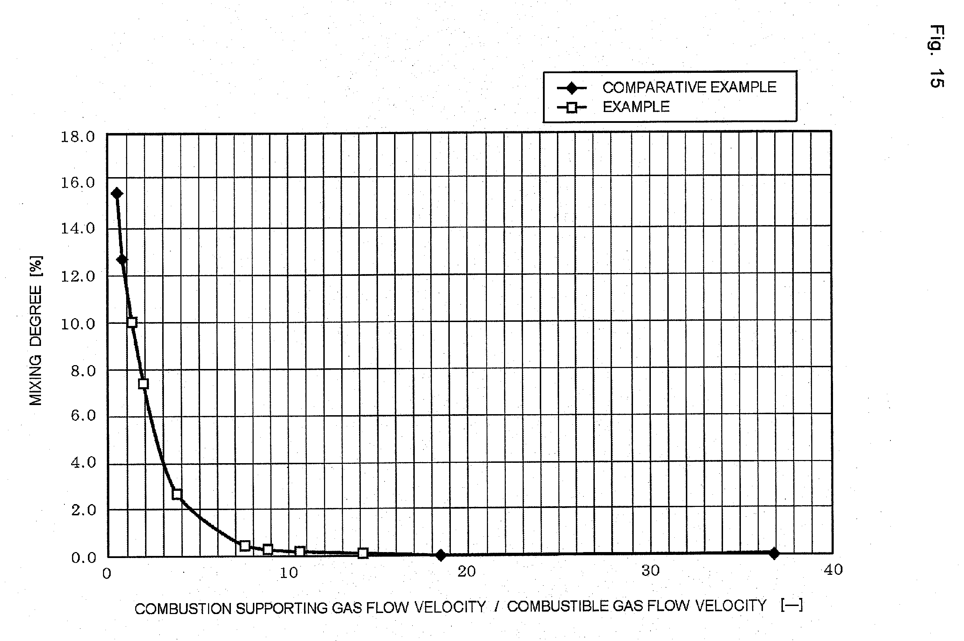

The simulation of each of the examples and the comparative examples is performed, and a result obtained by calculating the mixing degree at the position of the dispersion plate 26 is shown in Fig. 15. In the drawing, the horizontal axis indicates a value of the flow velocity ratio between the combustible gas and the combustion supporting gas, and the vertical axis indicates the mixing degree. In addition, the examples are plotted as a white square (□), and the comparative examples are plotted as a black rhombus (♦).

According to the simulation result shown in Fig. 15, the mixing degree of both gases is depicted as a curve which decreases so as to be inversely proportional to an increase in the flow velocity ratio, and in the case where the flow velocity ratio is 1.3 or more, the mixing degree is 10% or less, so that the satisfactory mixing state is obtained. In addition, in the case where the flow velocity ratio is about 2.5 or more, the mixing degree is 5% or less, so that the more desirable mixing state is obtained.

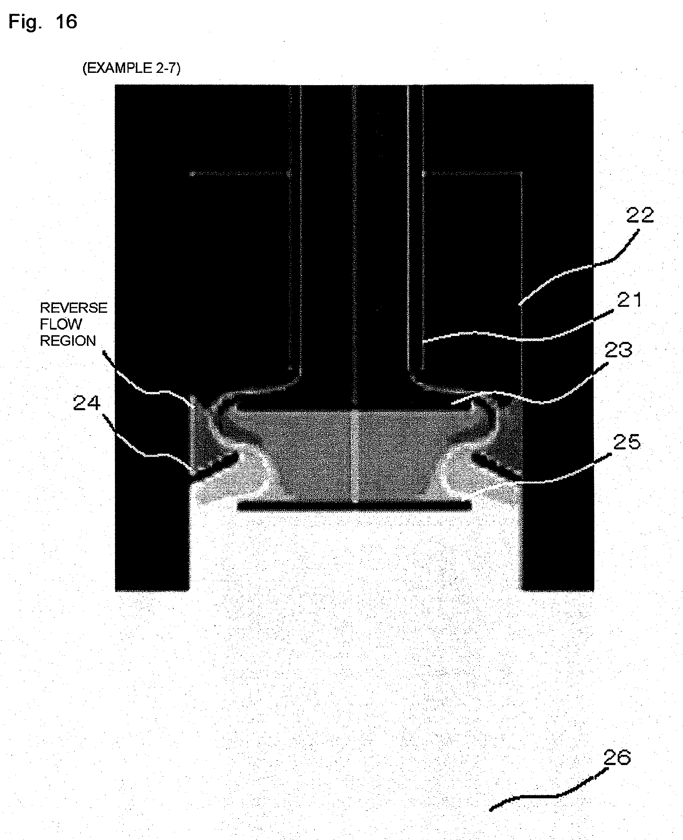

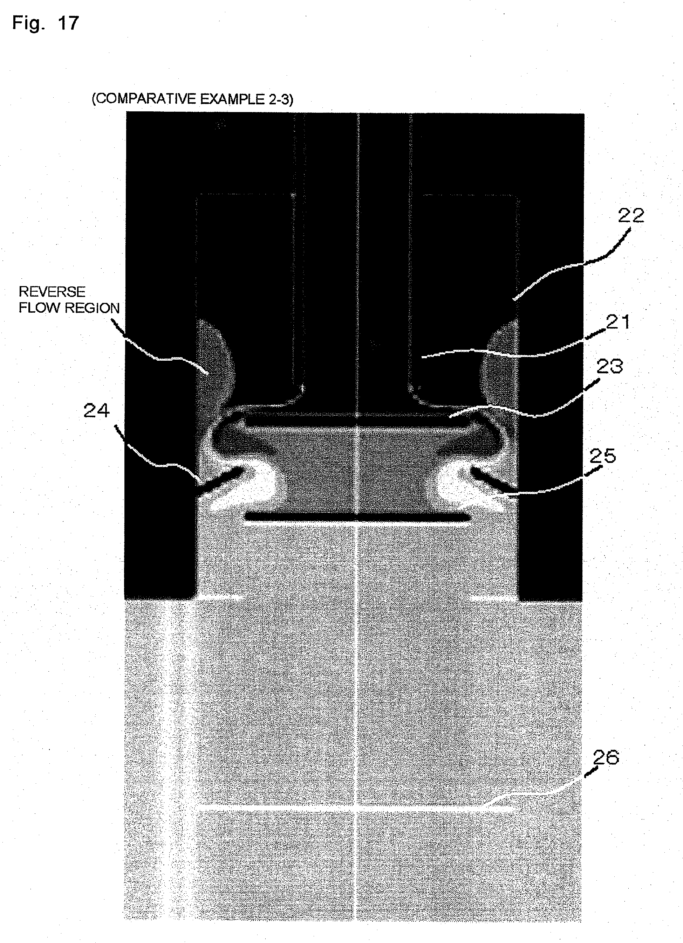

Likewise, when the flow velocity ratio between the combustible gas and the combustion supporting gas becomes large, it is possible to obtain the more satisfactory mixing state. However, when the flow velocity ratio increases, for example, as in the simulation result of the "example 2-7" shown in Fig. 16, the degree of the reverse flow of the annular plate 24 gradually becomes larger. In addition, in the simulation result of the "comparative example 2-3" shown in Fig. 17, the reverse flow flows into the combustible gas flow channel 32. Since such a state is not desirable in that there is a high possibility of causing the mixing state of the stoichiometric proportion in which the combustion speed becomes the fastest due to the reversely flowing gas, the "example 2-7" in which the reverse flow to the combustible gas flow channel 32 is not observed is set to the maximum value of the flow velocity ratio of obtaining the appropriate fluid state. As described above, preferably, the flow velocity ratio between the combustible gas and the combustion supporting gas is in the range of 1.3 to 14, and desirably in the range of 2.5 to 14.

Description of Reference Numerals and Signs

| 1: | SYNTHETIC GAS MANUFACTURING APPARATUS |
|---|---|
| 11: | REACTOR |
| 15: | CATALYST LAYER |
| 2, 2a: | GAS MIXING DEVICE |
| 21: | INNER PIPE |
| 22: | OUTER PIPE |
| 23: | FIRST DISK |
| 232: | PROTRUSION |
| 24, 24a, 24b: | ANNULAR PLATE |
| 25: | SECOND DISK |
| 3: | MIXING SPACE |

**Claims**

1. A gas mixing device comprising:

an inner pipe which supplies one of a combustible gas and a combustion supporting gas from a gas outflow port as an opening on one end side thereof;
an outer pipe which is disposed so as to surround the inner pipe and extends to the downstream side of the gas outflow port of the inner pipe so that a space formed between the outer pipe and the inner pipe forms a flow channel of the other of the combustible gas and the combustion supporting gas;
a first guide member which is provided inside the outer pipe on the downstream side of the gas outflow port so as to guide the gas, flowing out from the gas outflow port of the inner pipe, outward and is larger than an inner diameter of the inner pipe;
a second guide member which is formed in an annular shape along an inner wall of the outer pipe on the downstream side of the first guide member so that the inner peripheral portion is located closer to the upstream side than the outer peripheral portion and the inner peripheral portion is located closer to the center than the outer peripheral portion of the first guide member; and
a third guide member which is provided on the downstream side of the second guide member in the outer pipe so as to guide the gas, guided by the second guide member, outward.

2. The gas mixing device according to claim 1,
wherein the outer peripheral portion of the first guide member is provided with a protrusion which is provided in the circumferential direction so as to protrude to the upstream side.

3. The gas mixing device according to claim 1,
wherein a surface on the upstream side of the second guide member is formed as an inclined surface which is inclined from the outer peripheral portion toward the inner peripheral portion.

4. A synthetic gas manufacturing apparatus comprising:

the gas mixing device according to claim 1 in which the combustible gas mainly containing methane is supplied to the outer pipe and an oxygen containing gas as the combustion supporting gas is supplied to the inner pipe;
a gas treatment section which is provided on the downstream side of the gas mixing device and includes a catalyst layer obtaining a synthetic gas mainly containing hydrogen and carbon mono oxide by partially oxidizing methane using oxygen; and
a discharge section which discharges the synthetic gas from the gas treatment section.

5. A gas mixing method comprising the steps of:

supplying one of a combustible gas and a combustion supporting gas from a gas outflow port of an inner pipe having the gas outflow port as an opening on one end side thereof;
supplying the other of the combustible gas and the combustion supporting gas from a space between the inner pipe and an outer pipe which is disposed so as to surround the inner pipe and extends to the downstream side of the gas outflow port of the inner pipe;
guiding the gas, flowing out from the gas outflow port of the inner pipe, outward by using a first guide member which is provided inside the outer pipe on the downstream side of the gas outflow port and is larger than an inner diameter of the inner pipe;

guiding the gas, guided outward by the first guide member, toward a space formed inside the inner peripheral portion by using a second guide member which is formed in an annular shape along an inner wall of the outer pipe on the downstream side of the first guide member so that the inner peripheral portion is located closer to the upstream side than the outer peripheral portion and the inner peripheral portion is located closer to the center than the outer peripheral portion of the first guide member; and

guiding the gas, guided by the second guide member, outward by a third guide member which is provided on the downstream side of the second guide member in the outer pipe.

6. The gas mixing method according to claim 5,
wherein a flow velocity ratio between a flow velocity of the gas flowing through a gap between the inner pipe and the outer pipe and a flow velocity of the gas flowing through the inner pipe is equal to or more than 1.3 and equal to or less than 14.

7. A synthetic gas manufacturing method comprising the steps of:

mixing a gas by the gas mixing method according to claim 5 in which the combustible gas mainly containing methane is supplied to the outer pipe and an oxygen containing gas as the combustion supporting gas is supplied to the inner pipe;
obtaining a synthetic gas mainly containing hydrogen and carbon mono oxide by partially oxidizing methane contained in the mixed gas by using a catalyst layer and oxygen; and
discharging the synthetic gas.

Fig. 1

SYNTHETIC GAS
MANUFACTURING
APPARATUS

Fig. 2

SYNTHETIC GAS
MANUFACTURING
APPARATUS

GAS
MIXING
DEVICE

Fig. 3

Fig. 4

GAS MIXING DEVICE
2

22 OUTER PIPE

21 INNER PIPE

231

23 FIRST DISK

3

241

24 ANNULAR PLATE

25 SECOND DISK

251

261

26 DISPERSION PLATE

262

Fig. 5

Fig. 6

Fig. 8

Fig. 9

（a）

（b）

Fig. 10

( a )

( b )

Fig. 11

(EXAMPLE 1-1)

22
21
23
FAST COMBUSTION
REACTION REGION
24
25
26

Fig. 12

(EXAMPLE 1-2)

Fig. 13

(COMPARATIVE EXAMPLE 1-1)

Fig. 14

(COMPARATIVE EXAMPLE 1-2)

22

21

23

FAST COMBUSTION
REACTION REGION

24

25

26

Fig. 15

Fig. 16

(EXAMPLE 2-7)

REVERSE
FLOW
REGION

22
21
23
24
25
26

Fig. 17

(COMPARATIVE EXAMPLE 2-3)

REVERSE
FLOW REGION

22
21
23
24
25
26

## INTERNATIONAL SEARCH REPORT

| | International application No. |
|---|---|
| | PCT/JP2010/001737 |

A.  CLASSIFICATION OF SUBJECT MATTER
*C01B3/36*(2006.01)i, *C01B3/38*(2006.01)i, *F23D14/62*(2006.01)i

According to International Patent Classification (IPC) or to both national classification and IPC

B.  FIELDS SEARCHED

Minimum documentation searched (classification system followed by classification symbols)
C01B3/36, C01B3/38, F23D14/62

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2003-054909 A  (Chiyoda Corp.), 26 February 2003 (26.02.2003), Mode for carrying out the Invention; fig. 2, 3 & WO 2003/004405 A1 | 1-7 |
| A | JP 2008-214163 A  (IHI Corp.), 18 September 2008 (18.09.2008), entire text; drawings (Family: none) | 1-7 |
| A | JP 2008-214165 A  (IHI Corp.), 18 September 2008 (18.09.2008), entire text; drawings (Family: none) | 1-7 |

☐  Further documents are listed in the continuation of Box C.       ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 April, 2010 (28.04.10) | 18 May, 2010 (18.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009029680 A